(19) Europäisches Patentamt / European Patent Office / Office européen des brevets

(11) **EP 2 525 353 B1**

(12) **EUROPEAN PATENT SPECIFICATION**

(45) Date of publication and mention
of the grant of the patent:
**16.10.2013 Bulletin 2013/42**

(51) Int Cl.:
**G10L 25/69** (2013.01)     H04L 29/06 (2006.01)

(21) Application number: **12166644.0**

(22) Date of filing: **03.05.2012**

(54) **Parametric audio quality model for IPTV services**

Parametrisches Audioqualitätsmodell für IPTV-Dienste

Modèle de qualité audio paramétrique pour des services IPTV

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.05.2011 EP 11004037**
**16.05.2011 EP 11004036**

(43) Date of publication of application:
**21.11.2012 Bulletin 2012/47**

(73) Proprietor: **Deutsche Telekom AG**
**53113 Bonn (DE)**

(72) Inventors:
• **Garcia, Marie-Neige**
**10249 Berlin (DE)**
• **Raake, Alexander**
**10405 Berlin (DE)**
• **Argyropoulos, Savvas**
**10585 Berlin (DE)**
• **Feiten, Bernhard**
**13437 Berlin (DE)**
• **Wüstenhagen, Ulf**
**15537 Grünheide (DE)**
• **List, Peter**
**64859 Eppertshausen (DE)**

(74) Representative: **Vossius & Partner**
**Siebertstrasse 4**
**81675 München (DE)**

(56) References cited:
**EP-A1- 2 288 087**

• **GARCIA M N ET AL: "Impairment-factor-based audio-visual quality model for IPTV", QUALITY OF MULTIMEDIA EXPERIENCE, 2009. QOMEX 2009. INTERNATIONAL WORKSHOP ON, IEEE, PISCATAWAY, NJ, USA, 29 July 2009 (2009-07-29), pages 1-6, XP031528709, ISBN: 978-1-4244-4370-3**

**Description**

The present invention relates to a method and an apparatus for assessing the quality of an audio signal, and in particular for assessing the quality of an audio signal transmitted by using encoding methods and/or compressing methods and/or encrypting methods.

Among the numerous TV distribution services, IPTV (Internet protocol TV) is becoming increasingly important and has replaced analogue or non packet based transmission methods. It is a major responsibility of the broadcast provider towards both content provider and customer to maintain the quality of its service. In large IPTV networks only fully automated quality monitoring probes can fulfil this requirement.

In order to achieve a high degree of user satisfaction for IP-based multimedia services like IPTV, the perceived quality of audio, video and audio-video needs to be estimated. This can be achieved by conducting perception tests. However, it is well known that perception tests are time-consuming and are not applicable in case of real-time service operation. As a consequence, instrumental methods are often preferred. Those methods can for instance output the degree of similarity between the video received at the user side and the original non-degraded video. Further, in EP 2 413 604 A1, a method and an apparatus for assessing the quality of a video signal has been provided. The present invention, however, focuses on the quality metrics of an audio signal.

Rix *et al.* provide in Ref. [1] an overview of existing audio and speech quality metrics. Both intrusive and non-intrusive methods, as well as signal- and parameter- based models are covered. In the context of the present invention, access to the encrypted encoded bit stream is available before it enters the decoder, i.e., before the signal is decoded. The reference (non- degraded) and the decoded audio signal are not available. Moreover, the complexity of the model should stay low. Thus, the present invention focuses on non- intrusive parametric audio quality metrics.

Most parametric models depicted in the literature (Refs. [2, 3] and [4]) are dedicated to voice-link. However, these approaches as well as the ones related to the parametrization of the effect of packet-loss in Voice over IP (VoIP) [5, 6] may be used in the context of audio-link as well. For instance, Graubner *et al.* make use in Ref. [7] of the impairment-factor based approach of the E-model for predicting audio quality of Broadcast Audio over IP with a full-reference model.

A non-intrusive parametric audio quality model is the model proposed by Egi *et al.* in Ref. [8]. This model is suitable for both low and high bit rate applications like MobileTV and IPTV. It takes as input parameters the audio bit rate, the codec type, the sampling rate, the frame length, the packet-loss-frequency (the number of loss events), and the average burst-length. The codec type, sampling rate and frame-length are pre-determined. This model shows high correlation performance with the subjective test results. However, it has been trained on one codec only (AAC-LC). Moreover, as noted by the authors, the interaction between audio bit rate and packet-loss-rate is not considered.

As a consequence, there is still a need for a method based on a parametric audio quality model for IPTV services for various codec typically used in IPTV, and an apparatus allowing for using this method.

The object of the present invention is thus to provide a method based on a parametric audio quality model for IPTV services for various codec typically used in IPTV, and an apparatus allowing for using this method.

This object is achieved by the method and the apparatus with the features as disclosed by the claims presented in this document.

The invention can be summarised as follows:

The method according to the present invention employs a parametric audio quality model for IPTV services. The method is applicable to network planning and packet-layer quality monitoring of encrypted audio. Addressed degradations are audio compression (MPEG-I Layer II & III, MPEG-2 AAC LC, MPEG-4 HE-AACv2, and AC-3) and audio frame loss for various frame-loss-patterns. Audio perception tests have shown that the HE-AAC and AAC codec perform better than the MPEG-I Layer II and III both in loss-free and lossy cases. It has been also observed that for these two former codec, audio signal containing speech yields different perceived quality than speech-free signal. The loss location does not seem to influence the perceived quality while the burst length does for low packet-loss-rates. The invented method takes as input parameters the audio codec, bit rate, frame loss rate and burst length and shows a correlation of 95 % with the subjective ratings.

Now, a description of the parametric audio model the invention is based upon will be given:

In the following, it is assumed that the perceptual impairment linked with certain kinds of degradations may be considered as additive on a perceptual rating scale. Based on this assumption, we compute the Mean Opinion Score (MOS) per condition over all subjects, transform it to the 100-point model-scale (R) using the conversion defined in ITU-T Recommendation G.107 Appendix I [2], and decompose the audio quality model as follows (see Refs. [13] and [14] for details on the model):

$$Q_A = Qo_A - Icod_A - Itra_A \ , \tag{1}$$

wherein $Q_A$ is the predicted audio-quality (in the following also termed "perception quality") and $Qo_A$ is the base quality level (in the following also simply referred to as "base quality") the transmitted audio signal can reach for the respective target service. In this paper, $Qo_A$ is set to the transformed maximum quality rating obtained in the audio subjective tests. $Icod_A$ is the quality impact due to audio compression (in the following also referred to as "compression quality impact"), and $Itra_A$ is the quality impact due to audio frame loss (in the following also termed "frame loss quality impact"). $Icod_A$ is derived from the subjective tests for error-free conditions as follows: $Icod_A = Qo_A - Q_A$. Using all conditions, we obtain $Itra_A$ by computing $Itra_A = Qo_A - Icod_A - Q_A$.

In a least-square curve fitting procedure using the audio test results (an example of a corresponding audio test will be described below with the help of the figures) as target values, we obtain for the frame-loss-free case:

$$Icod_A = a1 \cdot \exp(a2 \cdot bitrate) + a3 \ , \qquad (2)$$

wherein $a1$, $a2$, and $a3$ are curve-fitting coefficients that depend on the used codec.

Following the same least-square procedure, one obtains in case of frame-loss:

$$Itra_A = (b0 - Icod_A) \cdot \frac{Pfl}{((b1 \cdot \mu + b2) + Pfl)} \ , \qquad (3)$$

Here, $b0$, $b1$, and $b2$ are the curve-fitting coefficients. The parameters $Pfl$ and $\mu$ are resp. the average frame-loss-rate (preferably in percent) and the average number of frames lost in a row.

The base quality is preferably set to $Qo_A = 100$. However, as this value can in principle be chosen arbitrarily, only depending on the scale used for measuring the perception quality $Q_A$, also different values for the base quality (as well as for the maximum perception quality $Q_A$) can be used, e.g. $Qo_A = 1$. Of course, the set of parameters $a1$, $a2$, $a3$, $b0$, $b1$, and $b2$ has to be chosen accordingly.

For a base quality of $Qo_A = 100$, an example for an appropriate set of parameters (i.e., $a1$, $a2$, $a3$, $b0$, $b1$, and $b2$) to be used within the above Eqs. (1) to (3) employed in the method is given in the following Table 1. As can be seen, the parameter set depends on the used codec. However, other values may also be used in the above Eqs. (1) to (3). In particular, it may be appropriate to vary each of the parameters within a range of a relative deviation of $\pm 10\%$ from the respective value given in Table 1.

**Table 1:** Exemplary values for the parameters $a1$, $a2$, $a3$, $b0$, $b1$, and b2 in dependency of the used codec to be used in Eqs. (1) to (3) together with the base quality $Qo_A = 100$.

| Codec | a1 | a2 | a3 | b0 | b1 | b2 |
|---|---|---|---|---|---|---|
| aac | 60.67 | -0.04 | 16.78 | 132 | 15.04 | 15.04 |
| heaac | 75.58 | -0.09 | 24.67 | 200 | 37.99 | 36.04 |
| mp2 | 92.81 | -0.02 | 17.74 | 92.1 | 1.72 | 0.76 |
| mp3 | 92.53 | -0.01 | 0 | 84.77 | 0.33 | 0.33 |
| ac3 | 100 | -0.03 | 20.65 | 80 | 0 | 1.59 |

Although it has been proved (see below) that the content type has an influence on the perceived quality, the model provides the same estimated quality for all contents.

One aspect of the invention relates to a method for estimating the perception quality of a decoded audio signal being decoded from an encoded and/or encrypted audio signal. This method comprises the following steps:

a) estimating the compression quality impact $Icod_A$ due to audio compression;
b) estimating the perception quality $Q_A$ of the decoded audio signal using the estimations obtained in at least one of the foregoing steps.

One aspect of the invention relates to a method, wherein step a) of estimating the compression quality impact

$Icod_A$ uses one or more coefficients and/or the bit rate, wherein the one or more coefficients depend on the type of the encoded and/or encrypted audio signal.

One aspect of the invention relates to a method, wherein step a) of estimating the compression quality impact $Icod_A$ is performed in accordance with the equation

$$Icod_A = a1 \cdot \exp(a2 \cdot bitrate) + a3 \,,$$

wherein *a1, a2,* and *a3* are coefficients depending on the type of the encoded and/or compressed and/or encrypted audio signal and *bitrate* denotes the bit rate.

One aspect of the invention relates to a method, wherein step b) is performed using the equation

$$Q_A = Qo_A - Icod_A \,,$$

wherein $Qo_A$ denotes a fixed base quality, and wherein preferably $Qo_A = 100$.

One aspect of the invention relates to a method with an additional step of

a') estimating the frame loss quality impact $Itra_A$ due to audio frame loss; and
wherein the estimated frame loss quality impact $Itra_A$ is also used in the step of estimating the perception quality $Q_A$.

One aspect of the invention relates to a method, wherein the step a') of estimating the frame loss quality impact $Itra_A$ uses:

one or more coefficients and/or
the average frame-loss rate *Pfl,* preferably in percent, and/or
the average number of frames lost in a row $\mu$.

One aspect of the invention relates to a method, wherein the step a') of estimating the frame loss quality impact $Itra_A$ uses the estimated compression quality impact $Icod_A$.

One aspect of the invention relates to a method, wherein the step of estimating the frame loss quality impact $Itra_A$ is performed in accordance with the equation

$$Itra_A = (b0 - Icod_A) \cdot \frac{Pfl}{((b1 \cdot \mu + b2) + Pfl)} \,,$$

wherein *b0, b1,* and *b2* are coefficients.

One aspect of the invention relates to a method, wherein step b) is performed using the equation

$$Q_A = f(Qo_A \,, \; Icod_A \,, \; Itra_A) \text{ with a suitable function} f \,,$$

wherein $Qo_A$ denotes a fixed base quality, and wherein preferably $Qo_A = 100$.

One aspect of the invention relates to a method, wherein step b) is performed using the equation

$$Q_A = Qo_A - \alpha \, Icod_A - \beta \, Itra_A \text{ with } 0 \leq \alpha, \beta \leq 1 \,,$$

wherein $Qo_A$ denotes a fixed base quality, and wherein preferably $Qo_A = 100$.

One aspect of the invention relates to a method, wherein step b) is performed using the equation

$$Q_A = Qo_A - Icod_A - Itra_A \,,$$

wherein $Qo_A$ denotes a fixed base quality, and wherein preferably $Qo_A$ =100.

One aspect of the invention relates to a method, wherein the coefficients are obtained by applying a least-square curve fitting procedure using the rates of perception tests as target values.

One aspect of the invention relates to a method, wherein the audio signal is encoded/decoded and/or encrypted/decrypted according to one of the following codec types: MPEG-1 Layer II (mp2), MPEG-1 Layer III (mp3), MPEG-2 AAC LC (aac), MPEG-4 HE-AACv2 (heaac), and AC-3 (ac3).

One aspect of the invention relates to a method, wherein the audio signal is at least a part of a non-interactive data stream. The non-interactive data stream may be a non-interactive audio or audiovisual stream.

One aspect of the invention relates to a method, wherein the audio signal is at least a part of an interactive data stream. The interactive data stream may be an interactive audio or audiovisual stream.

One aspect of the invention relates to a method, wherein at least a part of the coefficients are further depending on the content of the audio signal.

One aspect of the invention relates to a method, wherein at least a part of the coefficients and/or the bit rate, and/or, as far as used, the average frame-loss rate *Pfl* and/or the average number of frames lost in a row $\mu$ are computed from the packet header information extracted from the bit stream of the audio signal and/or derived from side information.

One aspect of the invention relates to a method, wherein the method of the invention is combined with one ore more other methods for estimating the impact on the quality by other impairments than encoding and/or encrypting of an audio signal, wherein the one or more other methods each comprise at least a step of estimating a perception quality of the decoded audio signal.

One aspect of the invention relates to a method, wherein the combination of the method of the invention and the one or more other methods is a linear function of these methods.

One aspect of the invention relates to a method, wherein the combination of the method of the invention and the one or more other methods is a multiplicative function of these methods.

One aspect of the invention relates to a method, wherein the method of the invention is combined with a method for estimating the perception quality of a decoded video signal being decoded from an encoded and/or encrypted video signal.

One aspect of the invention relates to a method for monitoring the quality of a transmitted audio signal with the steps:

> A) transmitting the audio signal from a server to the client;
> B) client-side executing the method for estimating the perception quality of the transmitted audio signal;
> C) transferring the result of the estimation of step B) to the server;
> D) server-side monitoring the quality of the transmitted audio signal.

One aspect of the invention relates to a method for monitoring the quality of a transmitted audio signal of claim 18 with the additional steps:

> E) analysing the monitored quality of the transmitted audio signal, preferably in dependence of transmission parameters; and optionally
> F) changing the transmission parameters based on the analysis of step E) in order to increase the quality of the transmitted audio signal.

One aspect of the invention relates to an apparatus for estimating the perception quality of a decoded audio signal being decoded from an encoded and/or encrypted audio signal. The apparatus comprises:

> a compression quality estimator configured for estimating the compression quality impact $Icod_A$ due to audio compression;
> an adjustor configured for adjusting the perception quality $Q_A$ of the decoded audio signal.

One aspect of the invention relates to an apparatus, wherein the adjustor is configured for adjusting the perception quality $Q_A$ of the decoded audio signal using the equation

$$Q_A = Qo_A - Icod_A \, ;$$

wherein $Qo_A$ denotes a fixed base quality,

One aspect of the invention relates to an apparatus configured for adjusting the perception quality $Q_A$ of the decoded audio signal, wherein the fixed base quality is set to $Qo_A = 100$.

One aspect of the invention relates to an apparatus configured for adjusting the perception quality $Q_A$ of the decoded audio signal, wherein the compression quality estimator is configured for estimating the compression quality by using the equation

$$Icod_A = a1 \cdot \exp(a2 \cdot bitrate) + a3 \, ,$$

wherein $a1$, $a2$, and $a3$ are coefficients depending on the type of the encoded and/or compressed and/or encrypted audio signal and $bitrate$ denotes the bit rate.

One aspect of the invention relates to an apparatus, wherein the apparatus further comprises a frame loss quality impact estimator configured for estimating the frame loss quality impact $Itra_A$ due to audio frame loss.

One aspect of the invention relates to an apparatus, wherein the adjustor is configured for adjusting the perception quality $Q_A$ of the decoded audio signal using the equation

$$Q_A = Qo_A - Icod_A - Itra_A;$$

wherein $Qo_A$ denotes a fixed base quality, and wherein preferably $Qo_A = 100$.

One aspect of the invention relates to an apparatus, wherein the adjustor is configured for adjusting the perception quality $Q_A$ of the decoded audio signal, wherein the compression quality estimator is configured for estimating the compression quality $Icod_A$ by using the equation

$$Icod_A = a1 \cdot \exp(a2 \cdot bitrate) + a3 \, ,$$

wherein $a1$, $a2$, and $a3$ are coefficients depending on the type of the encoded and/or encrypted audio signal and $bitrate$ denotes the bit rate; and/or
the frame loss quality impact estimator configured for estimating the frame loss quality impact $Itra_A$ by using the equation

$$Itra_A = (b0 - Icod_A) \cdot \frac{Pfl}{((b1 \cdot \mu + b2) + Pfl)} \, ,$$

wherein $Pfl$ is the average frame-loss rate, preferably in percent, $\mu$ is the average number of frames lost in a row, and $b0$, $b1$, and $b2$ are coefficients.

One aspect of the invention relates to an apparatus for estimating the perception quality of a decoded audio signal being decoded from an encoded and/or encrypted audio signal, the apparatus comprising a computer or microchip configured to perform any one of the above described methods.

One aspect of the invention relates to a set top box connectable to a receiver for receiving an encoded and/or encrypted audio signal, wherein the set top box comprises an apparatus as described above.

List of figures:

Fig. 1: 11-point quality scale (ITU-T Recommendations P.910 [12]) used in the audio subjective tests.

Fig. 2: Subjective quality (on the 11-point scale) for four different codec and various bitrates.

Fig. 3: Perceived audio quality as a function of the audio bit rate for various content types and for *mp2* codec.

Fig. 4: Subjective quality for random frame loss for different codec and bitrates.

6

Fig. 5: Subjective quality for random and bursty frame loss

for mp2 codec and two bitrates.

Fig. 6: Perceived quality for random frame loss for each codec and high bit rate taking the results averaged per content and per error pattern.

Fig. 7: Subjective quality for bursty frame loss for *mp2* codec and high bit rate.

Fig. 8: Estimated audio quality vs. perceived audio quality.

Other aspects, features, and advantages will be apparent from the summary above, as well as from the description that follows, including the figures and the claims.

Experimental Design

In order to develop the audio quality model, two audio subjective tests have been conducted. Test 1 addresses four codec and random frame- loss- rate, and Test 2 focuses on MPEG- 1 Layer II codec and bursty frame loss. The source material consists of five audio contents of 16 s duration each. The audio contents are representative of different TV- programs. They differ in terms of audio category and genre. The resulting audio content types are described in Table 2.

**Table 2:** Audio content descriptions.

| ID | Audio |
| --- | --- |
| A | Speech on music |
| B | Speech |
| C | Crowd noise (soccer fans) |
| D | Classical music |
| E | Pop music with singer |

In order to simulate typical IPTV degradations, the five source contents were processed off-line according to the test conditions listed in Table 3. This results in 49 audio test conditions for each of the five audio contents, leading to 245 audio sequences to be rated by the subjects.

**Table 3:** Test conditions used in Test 1 and Test 2. FLR: Frame-Loss-Rate; FLD: Frame-Loss-Distribution; PLC: Packet-Loss-Concealment.

| Parameters | Test 1 | Test 2 |
| --- | --- | --- |
| Format | wav (48 kHz, 16 bit, stereo) | wav (48 kHz, 16 bit, stereo) |
| Codec | MPEG-2 AAC LC[a] (aac) | aac |
|  | MPEG-4 HE-AACv2[b] (heaac) | heaac |
|  | MPEG-1 LII (mp2) | mp2 |
|  | MPEG-1 LIII (mp3) | mp3 |
| CBR | aac: {48, 64, 96} kbps | aac: {24, 32, 48, 96} kbps |
|  | heaac: {32, 48, 64} kbps | heaac: {16, 24} kbps |
|  | mp2: {48, 96, 192} kbps | mp2: {48, 64, 192} kbps |
|  | mp3: {64, 96, 128} kbps | mp3: {32, 48} kbps |
| FLR | {0, 1, 4, 8}% | mp2: {0, 1, 4, 8}% |
| FLD | random | random & bursty: {2, 4, 6} |
| PLC | codec-built-in (for details, see Ref. [9]) | mp2: silence insertion |

[a]AAC: Advanced Audio Coding; LC: Low Complexity
[b]HE-AAC: High Efficiency Advanced Audio Coding

The same six anchors were used in the two subjective tests. These anchors cover the whole quality range and degradation types used in the tests. They are used for mapping the results of both tests. More information can be found on the anchors in Ref. [9] and on the mapping procedure in Ref. [10].

The loss was inserted at the audio frame level. In order to study the influence of the loss location on the perceived quality, four error patterns were used per content and condition, one condition being the combination of a codec, bit rate, frame-loss-rate and frame burst-length (i.e. the averaged number of frames lost in a row). Each error pattern was rated by one fourth of the subjects.

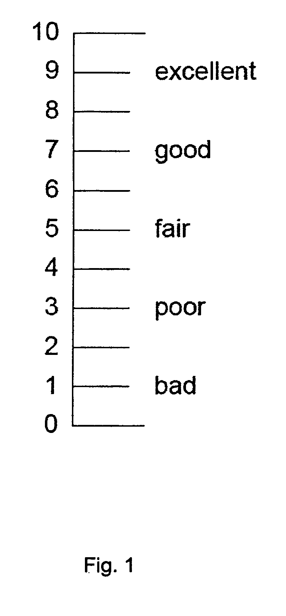

Listening conditions were compliant to ITU-T Recommendation P.800 [11]. To ensure that the processed, but uncompressed material could be played out without playback artifacts, professional high-performance systems were used for audio presentation. 29 subjects participated in each test, and each subject was allowed to participate in only one test. An absolute category rating (ACR) was used for collecting subjective quality judgements. The subjects rated the quality using the continuous 11-point quality scale recommended in ITU-T Recommendations P.910 [12] and shown in Figure 1. The uncompressed original audio were used as hidden references in the tests, but the scores for the hidden reference were not subtracted from the scores, that is no hidden-reference removal was applied.

Test Results

Results were collected from the two subjective tests described above. For each subjective test, the Mean Opinion Score (MOS) was computed per condition over all subjects, contents and error patterns.

Some of the test results have already been presented in Ref. [9]. They are reproduced here when they serve as basis for the modeling of the audio quality.

In the following, the impact of compression on the perceived quality of the audio signal will be discussed.

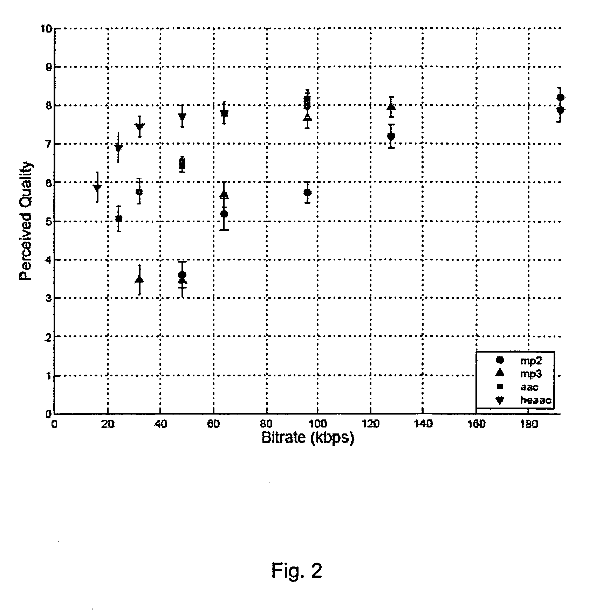

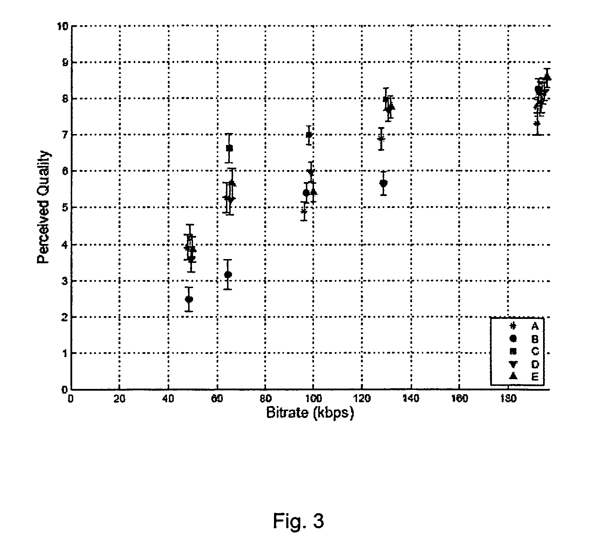

Figure 2 shows the quality impact of the audio bit rate for the four codec used in the tests and in absence of packet-loss. The best performing codec is *heaac*, followed by *aac*, then mp3 and mp2. For each codec, the perceived quality as a function of the audio bit rate follows an exponential shape. For the no-loss case, an analysis of variance using the perceived quality as dependent variable, the codec, bit rate and contents as independent variables, and the subjects as random variable, found a significant effect of the content on the perceived quality. This is particularly valid for *mp2*, as shown in Figure 3, for which the speech-only content (content "B") yields lower quality than the other contents.

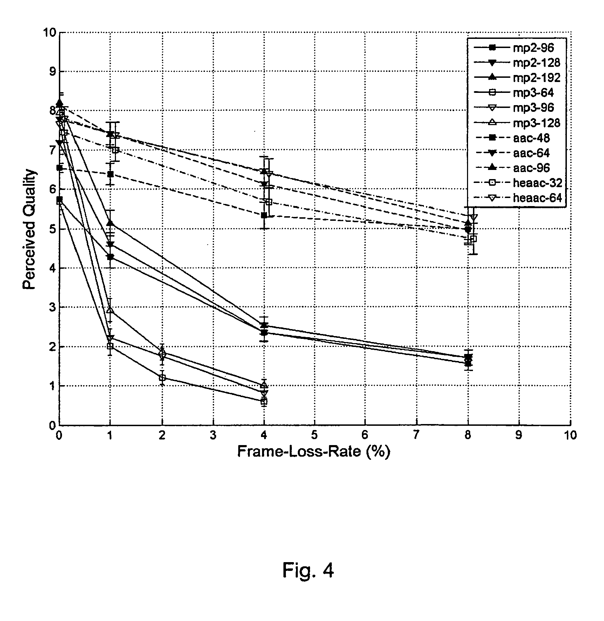

Figure 4 shows the quality impact of uniform frame-loss for the four codec at various bitrates. It can be observed that for a given bitrate, *heaac* and *aac* yield similar quality under packet-loss. *heaac* seems to be performing slightly better than *aac* at equal bitrate (64 kbps), but the difference is not significant, although systematic.

Both *heaac* and *aac* codec are much less sensitive to frame loss than *mp2* and *mp3*. In turn, *mp2* performs better than *mp3*. These results are expected since *heaac* and *aac* apply interpolation-based and frame-repetition-based concealment while mp2 and *mp3* insert silence as error concealment.

At last, for low-to-medium frame-loss rates and all codec, the perceived quality increases with the bit rate. This reflects the impact of compression in case of low-to-medium frame-loss-rate while this effect is hidden in case of high frame-loss-rate.

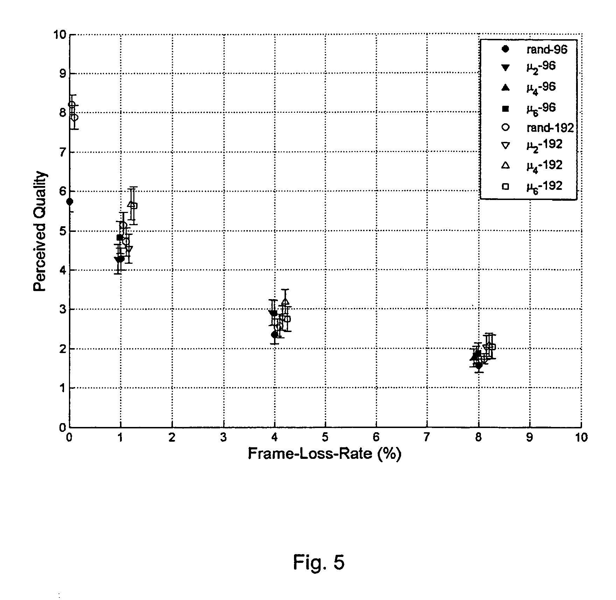

At this stage, we have studied the impact of the frame loss in case of uniform loss only. Figure 5 shows the quality impact of bursty loss for *mp2*. As for uniform loss, it has been observed for the different burstiness levels a small impact of the bit rate, with higher quality for higher bit rate. The burst length ranges from uniform to six frames lost in a row. At high frame- loss- rate, the burst length has no impact. At lower frame- loss- rate, longer burst length enhances the quality. This observation is expected to be still valid with higher burst length. Note that selecting six frames lost in a row as maximum burst length was motivated by the frame encapsulation: we have simulated the common case of having six audio frames in a PES (Packetized Elementary Stream) frame. When loosing an audio frame in the PES frame, the decoder can not resynchronize till the next PES header. As a consequence, loosing the first audio frame of the PES frame results in loosing six frames in a row.

In the following, the impact of error-pattern and content type on the perceived quality of the audio signal will be discussed.

In case of frame loss, results were so far averaged over all subjects, contents and error patterns. It is worth investigating the validity of the above observation when taking the results averaged per content and per error pattern over all subjects.

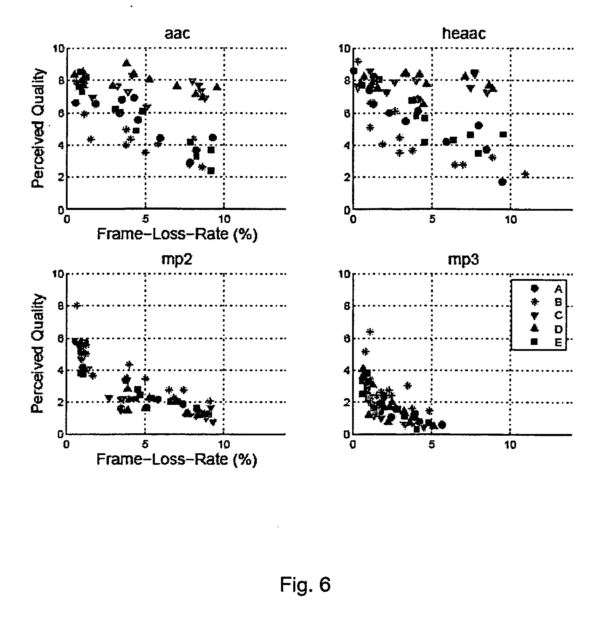

Figure 6 shows the perceived quality of uniform loss rate for each codec taking the results averaged per content and error pattern. It is obvious that the loss concealment algorithms implemented in *heaac* and *aac* perform much better on contents not containing speech (contents "C" and "D"). This is expected since speech signals are much less stationary than non-speech signal. Thus, when repeating an audio frame for compensating a lost frame as it is the case with *aac*, or interpolating the audio frame from surrounded non-lost frames as it is the case with *heaac*, the concealment is much less audible in case of stationary signals. This content dependency does not hold true for *mp2* and *mp3*. On the contrary, the speech-only signal "B" seems to yield better quality than the other types of signal.

Two instantiations of the same frame-loss-rate for a given codec and bit rate are represented by the same symbol on a vertical line in Figure 6. It can be observed in this figure that the influence of the error pattern and thus of the loss location is low, especially compared to the quality impact of loss rate and content in case of *heaac* and *aac.*

It should be reminded here that only one fourth of the subjects rated each error pattern. As a consequence, the 95% confidence interval values are higher than the ones we usually obtain when taking the average over all subjects. This reduces the probability of having a significant difference between the perceived quality of two instantiations of the same frame-loss-rate. This confirms the low influence of the loss location on the perceived quality. For the sake of clarity, the 95 % confidence interval was not represented in Fig. 6.

An analysis of variance taking as dependent variable the perceived quality, as independent variable the condition, the content and the error-pattern, and as random variable the subject, confirmed that the influence of the content type on the perceived quality is significant but not the influence of the error-pattern.

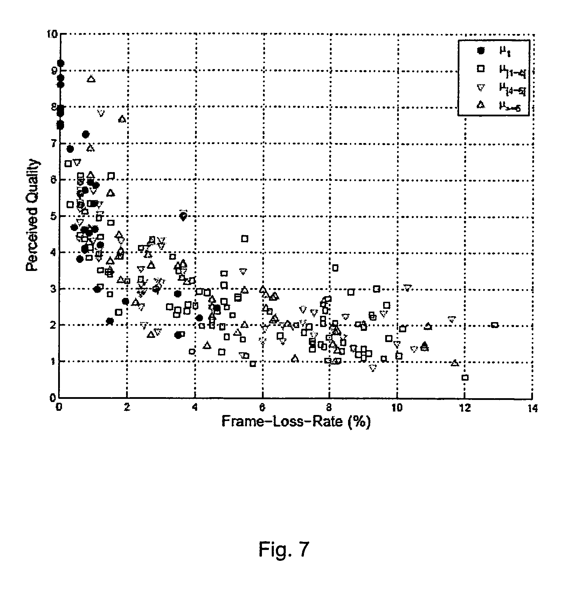

At last, Figure 7 shows the perceived quality as a function of the frame-loss-rate for high bit-rate-encoded *mp2* audio and bursty losses when taking the results per error-pattern. It had already discussed above that burst length influences the perceived quality in case of low frame-loss-rate. By taking now the ratings per error-pattern, we want to verify that averaging the ratings per error-pattern was not hiding a higher influence of the burst length. Figure 7 confirms the observation we previously made on Figure 5: the influence of the burst length, although quite low, is visible, especially for low frame-loss-rates.

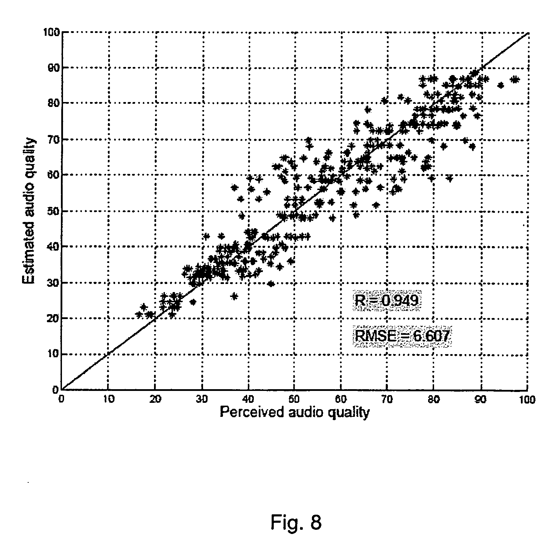

Figure 8 shows the audio quality as estimated by the model described by Eqs. (1) to (3) versus the perceived audio quality. The model is evaluated against subjective test results in terms of Pearson Correlation (R) and Root- Mean- Squared- Error (*RMSE,* on the model 100- point scale) . It shows high performance both when taking the results averaged over all contents (*R* = 0.99 and a *RMSE* = 2.27) and averaged per content (R = 0.95 and a *RMSE* = 6.61) .

Based on the results of audio perception tests, we have analysed the quality impact of audio compression and frame loss for four codec (MPEG-I Layer II&III, MPEG-2 AACLC, MPEG-4 HE-AACv2) and five content types typical for IPTV services. The HE-AAC and AAC codec are the best performing codec both in presence and in absence of frame loss. We have also observed that the behavior of the four codec differs between speech and speech-free signals, especially for the HE-AAC and AAC. At last, there is a tendency that bursty losses yield better perceived quality than uniform loss while the loss location does not influence the perceived quality. These analyses served as basis for the development of a parametric audio quality model for IPTV services. This model takes as input the audio codec, bit rate, frame loss rate, burst length and show high correlation (*R* = 0.95) and low *RMSE* (*RMSE* = 6.61) with subjective test results.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

References

[1] A.W. Rix, J.G. Beerends, and D.-S-Kim, "Objective Assessment of Speech and Audio Quality - Technology and Applications," in IEEE Transactions on Audio, Speech and Language Processing, 2006, vol. 14 no. 6.

[2] ITU-T Recommendation G.107, "The E-model, a computational model for use in transmission planning," 2005.

[3] A. Clark, "Description of VQMON algorithm," in ITUT del. cont. COM12-D105, 2003.

[4] S. Broom, "VoIP: quality assessment: Taking account of the edge-device," in IEEE Trans. Audio Speech Language Process, 2006, vol. 14 no. 6.

[5] A. Clark, "Modeling the effects of burst packet loss and recency on subjective voice quality," in Internet Telephony Workshop (IPtel), 2001.

[6] A. Raake, "Short-and long-term packet loss behaviour: Towards speech quality prediction for arbitrary loss distributions," in IEEE Trans. Audio, Speech Language Process, 2006, vol. 14 no. 6.

[7] M. Graubner, P. Mogre, and T. Lorenzen, "QoE Assessment for Audio Contribution over IP (ACIP)," in AES 38th International Conference on Sound Quality Evaluation, 2010.

[8] N. Egi, T. Hayashi, and A. Takahashi, "Parametric Packet-Layer Model for Evaluation Audio Quality in Multimedia Streaming Services," in IEICE Transactions on Communications, 2010, vol. E93.B, pp. 1359-1366.

[9] B. Feiten, A. Raake, M.-N. Garcia, U. Wüstenhagen, and J. Kroll, "Subjective Quality Evaluation of Audio Streaming Applications on Absolute and Paired Rating Scales," in Pro. of 126th AES Convention, 2009.

[10] M- N. Garcia and A. Raake, "Normalization Of Subjective Video Test Results Using A Reference Test And Anchor Conditions For Efficient Model Development, " in Proc. of Second International Workshop on Quality of Multimedia Experience (QoMEX'10), 2010.

[11] "ITU-T Recommendation P.800: Methods for Subjective Determination of Transmission Quality.," 1996.

[12] "ITU-T Recommendation P. 910: Subjective video quality assessment methods for multimedia applications," 1999.

[13] A. Raake, M.N. Garcia, S. Moeller, J. Berger,F. Kling, P. List, J. Johann, and C. Heidemann, "T-V-MODEL: Parameter-based prediction of IPTV quality," in Proc. of ICASSP, 2008.

[14] M-N. Garcia and A. Raake, "Impairment-factor based audio-visual quality model for IPTV," in Proc. of QOMEX, 2009.

## Claims

1. Method for estimating the perception quality of a decoded audio signal being decoded from an encoded audio signal, or from an encrypted audio signal, or from an encoded and encrypted audio signal, the method comprising the step of:

   a) estimating the compression quality impact $Icod_A$ due to audio compression;
   and **characterized by** the step of:
   b) estimating the frame loss quality impact $Itra_A$ due to audio frame loss, using the estimated compression quality impact $Icod_A$, wherein the step of estimating the frame loss quality impact $Itra_A$ uses at least one of: one or more coefficients, the average frame-loss rate Pfl, preferably in percent, the average number of frames lost in a row $\mu$; and wherein the step of estimating the frame loss quality impact $Itra_A$ is performed in accordance with the equation

$$Itra_A = (b0 - Icod_A) \cdot \frac{Pfl}{((b1 \cdot \mu + b2) + Pfl)},$$

   wherein $b0$, $b1$, and $b2$ are coefficients; and
   c) estimating the perception quality $Q_A$ of the decoded audio signal using the estimations obtained in the foregoing steps.

2. The method of claim 1, wherein the step a) of estimating the compression quality impact $Icod_A$ uses one or more coefficients or the bit rate or one or more coefficients and the bit rate, wherein the one or more coefficients depend on the type of the encoded audio signal, or encrypted audio signal, or encoded and encrypted audio signal.

3. The method of claim 2, wherein the step a) of estimating the compression quality impact $Icod_A$ is performed in accordance with the equation

$$Icod_A = a1 \cdot \exp(a2 \cdot bitrate) + a3,$$

   wherein $a1$, $a2$, and $a3$ are coefficients depending on at least one of: the type of the encoded audio signal, the type of the compressed audio signal, the type of the encrypted audio signal, and wherein $bitrate$ denotes the bit rate.

4. The method of any of claims 1 to 3, wherein step b) is performed using the equation

$$Q_A = Qo_A - Icod_A,$$

   wherein $Qo_A$ denotes a fixed base quality, and wherein preferably $Qo_A = 100$.

5. The method of any of claims 1 to 4, wherein step c) is performed using one of the equations

$$Q_A = f(Qo_A, \; Icod_A, \; Itra_A)$$

with a suitable function $f$; or

$$Q_A = Qo_A - \alpha \; Icod_A - \beta \; Itra_A$$

with $0 \leq \alpha, \beta \leq 1$; or

$$Q_A = Qo_A - Icod_A - Itra_A,$$

wherein $Qo_A$ denotes a fixed base quality, and wherein preferably $Qo_A = 100$.

6. The method of any of claims 1 to 5, wherein the coefficients are obtained by applying a least-square curve fitting procedure using the rates of perception tests as target values.

7. The method of any of the preceding claims, wherein the audio signal is encoded/decoded, or encrypted/decrypted, or encoded/decoded and encrypted/decrypted according to one of the following codec types: MPEG-1 Layer II (mp2), MPEG-1 Layer III (mp3), MPEG-2 AAC LC (aac), MPEG-4 HE-AACv2 (heaac), and AC-3 (ac3).

8. The method of any of the preceding claims, wherein the audio signal is at least a part of a non-interactive data stream, preferably a non-interactive audio or audiovisual stream, or at least a part of an interactive data stream, preferably an interactive audio or audiovisual stream.

9. The method of any of the preceding claims, wherein at least a part of the coefficients are further depending on the content of the audio signal.

10. The method of any of the preceding claims, wherein at least one of the following are computed from the packet header information extracted from the bit stream of the audio signal and/or derived from side information: at least a part of the coefficients, the bit rate, the average frame-loss rate $Pfl$, the average number of frames lost in a row $\mu$.

11. The method of any of the preceding claims, wherein the method is combined with one ore more other methods for estimating the impact on the quality by other impairments than encoding, or encrypting, or encoding and encrypting of an audio signal, wherein the one or more other methods each comprise at least a step of estimating a perception quality of the decoded audio signal.

12. The method of claim 11, wherein the combination of the method of claims 1 to 10 and the one or more other methods is a linear function of these methods or a multiplicative function of these methods.

13. The method of any of the preceding claims, wherein the method is combined with a method for estimating the perception quality of a decoded video signal being decoded from an encoded, or an encrypted, or an encoded and encrypted video signal.

14. Method for monitoring the quality of a transmitted audio signal with the steps:

    A) transmitting the audio signal from a server to the client;
    B) client-side executing the method for estimating the perception quality of the transmitted audio signal according to any of claims 1 to 13;
    C) transferring the result of the estimation of step B) to the server;
    D) server-side monitoring the quality of the transmitted audio signal.

15. The method for monitoring the quality of a transmitted audio signal of claim 14 with the additional steps:

E) analysing the monitored quality of the transmitted audio signal, preferably in dependence of transmission parameters; and optionally

F) changing the transmission parameters based on the analysis of step E) in order to increase the quality of the transmitted audio signal.

16. Apparatus for estimating the perception quality of a decoded audio signal being decoded from an encoded audio signal, or an encrypted audio signal, or an encoded and encrypted audio signal, the apparatus comprising:

a compression quality estimator configured for estimating the compression quality impact $Icod_A$ due to audio compression;

and **characterized by**:

the compression quality estimator being configured for estimating the frame loss quality impact $Itra_A$ due to audio frame loss, using the estimated compression quality impact $Icod_A$, wherein estimating the frame loss quality impact $Itra_A$ uses at least one of: one or more coefficients, the average frame-loss rate $Pfl$, preferably in percent, the average number of frames lost in a row $\mu$; and wherein the estimating of the frame loss quality impact $Itra_A$ is performed in accordance with the equation

$$Itra_A = (b0 - Icod_A) \cdot \frac{Pfl}{((b1 \cdot \mu + b2) + Pfl)} \, ,$$

wherein $b0$, $b1$, and $b2$ are coefficients; and

an adjustor configured for adjusting the perception quality $Q_A$ of the decoded audio signal.

17. The apparatus of claim 16, wherein the compression quality estimator is configured for estimating the compression quality by using the equation

$$Icod_A = a1 \cdot \exp(a2 \cdot bitrate) + a3 \, ,$$

wherein $a1$, $a2$, and $a3$ are coefficients depending on at least one of: the type of the encoded audio signal, the type of the compressed audio signal, the type of the encrypted audio signal, and wherein $bitrate$ denotes the bit rate.

18. The apparatus of claim 16 or 17, wherein the adjustor is configured for adjusting the perception quality $Q_A$ of the decoded audio signal using the equation

$$Q_A = Qo_A - Icod_A - Itra_A;$$

wherein $Qo_A$ denotes a fixed base quality, and wherein preferably $Qo_A = 100$.

19. Apparatus for estimating the perception quality of a decoded audio signal being decoded from an encoded and/or encrypted audio signal, the apparatus comprising a computer or microchip configured to perform the method according to claims 1 to 15.

20. Set top box connectable to a receiver for receiving an encoded and/or encrypted audio signal, wherein the set top box comprises the apparatus according to any of claims 16 to 18.

**Patentansprüche**

1. Verfahren zum Schätzen der Wahrnehmungsqualität eines decodierten Audiosignals, das aus einem codierten Audiosignal oder aus einem verschlüsselten Audiosignal oder aus einem codierten und verschlüsselten Audiosignal decodiert wird, wobei das Verfahren den folgenden Schritt aufweist:

a) Schätzen des Kompressions-Qualitätseinflusses Icod$_A$ aufgrund der Audiokompression;
und **gekennzeichnet durch** den Schritt:
b) Schätzen des Rahmenverlust-Qualitätseinflusses Itra$_A$ aufgrund des Audiorahmenverlusts unter Verwendung des geschätzten Kompressions-Qualitätseinflusses Icod$_A$, wobei der Schritt des Schätzens des Rahmenverlust-Qualitätseinflusses Itra$_A$ wenigstens eines der Folgenden verwendet: einen oder mehrere Koeffizienten, die mittlere Rahmenverlustrate Pfl, vorzugsweise in Prozent, die mittlere Anzahl von Rahmen, die hintereinander verloren werden $\mu$; und wobei der Schritt des Schätzens des Rahmenverlust-Qualitätseinflusses Itra$_A$ gemäß der Gleichung

$$Itra_A = (b0 - Icod_A) \cdot \frac{Pfl}{((b1 \cdot \mu + b2) + Pfl)}$$

durchgeführt wird, wobei b0, b1 und b2 Koeffizienten sind; und
c) Schätzen der Wahrnehmungsqualität Q$_A$ des decodierten Audiosignals unter Verwendung der in den vorangehenden Schritten gewonnenen Schätzungen.

2. Verfahren nach Anspruch 1, wobei der Schritt a) des Schätzens des Kompressions-Qualitätseinflusses Icod$_A$ einen oder mehrere Koeffizienten oder die Bitrate oder einen oder mehrere Koeffizienten und die Bitrate verwendet, wobei der eine oder die mehreren Koeffizienten von der Art des codierten Audiosignals oder verschlüsselten Audiosignals oder codierten und verschlüsselten Audiosignals abhängen.

3. Verfahren nach Anspruch 2, wobei der Schritt a) des Schätzens des Kompressions-Qualitätseinflusses Icod$_A$ gemäß der Gleichung

$$Icod_A = a1 \cdot \exp(a2 \cdot Bitrate) + a3$$

durchgeführt wird, wobei a1, a2 und a3 Koeffizienten sind, die von wenigstens einem der Folgenden abhängen: der Art des codierten Audiosignals, der Art des komprimierten Audiosignals, der Art des verschlüsselten Audiosignals, und wobei *Bitrate* die Bitrate bezeichnet.

4. Verfahren nach einem der Ansprüche 1 bis 3, wobei der Schritt b) unter Verwendung der Gleichung

$$Q_A = Qo_A - Icod_A$$

durchgeführt wird, wobei Qo$_A$ eine feste Basisqualität bezeichnet und wobei vorzugsweise Qo$_A$ = 100.

5. Verfahren nach einem der Ansprüche 1 bis 4, wobei der Schritt c) unter Verwendung einer der Gleichungen

$$Q_A = f(Qo_A, Icod_A, Itra_A)$$

mit einer passenden Funktion f; oder

$$Q_A = Qo_A - \alpha \, Icod_A - \beta \, Itra_A,$$

wobei $0 \leq \alpha, \beta \leq 1$; oder

$$Q_A = Qo_A - Icod_A - Itra_A,$$

durchgeführt wird, wobei $Qo_A$ eine feste Basisqualität bezeichnet und wobei vorzugsweise $Qo_A = 100$.

6. Verfahren nach einem der Ansprüche 1 bis 5, wobei die Koeffizienten erhalten werden, indem ein Kurvenanpassungsverfahren der kleinsten Quadrate unter Verwendung der Wahrnehmungstestraten als Zielwerte angewendet wird.

7. Verfahren nach einem der vorhergehenden Ansprüche, wobei das Audiosignal gemäß einer der folgenden Codec-Arten codiert/decodiert oder verschlüsselt/entschlüsselt oder codiert/decodiert und verschlüsselt/entschlüsselt wird: MPEG-1 Schicht II (mp2), MPEG-1 Schicht III (mp3), MPEG-2 AAC LC (aac), MPEG-4 HE-AACv2 (heaac) und AC-3 (ac3).

8. Verfahren nach einem der vorhergehenden Ansprüche, wobei das Audiosignal wenigstens ein Teil eines nicht interaktiven Datenstroms, vorzugsweise eines nicht interaktiven Audio- oder audiovisuellen Stroms, ist oder wenigstens ein Teil eines interaktiven Datenstroms, vorzugsweise eines interaktiven Audio- oder audiovisuellen Stroms, ist.

9. Verfahren nach einem der vorhergehenden Ansprüche, wobei wenigstens ein Teil der Koeffizienten ferner von dem Inhalt des Audiosignals abhängt.

10. Verfahren nach einem der vorhergehenden Ansprüche, wobei wenigstens eines der Folgenden aus den Paketanfangsblockinformationen berechnet wird, die aus dem Bitstrom des Audiosignals extrahiert und/oder aus Nebeninformationen abgeleitet werden: wenigstens ein Teil der Koeffizienten, die Bitrate, die mittlere Rahmenverlustrate Pfl, die mittlere Anzahl von hintereinander verlorenen Rahmen $\mu$.

11. Verfahren nach einem der vorhergehenden Ansprüche, wobei das Verfahren mit einem oder mehreren anderen Verfahren zum Schätzen des Einflusses auf die Qualität durch andere Beeinträchtigungen als Codieren oder Verschlüsseln oder Codieren und Verschlüsseln eines Audiosignals kombiniert wird, wobei das eine oder die mehreren anderen Verfahren jeweils wenigstens einen Schritt zum Schätzen einer Wahrnehmungsqualität des decodierten Audiosignals aufweisen.

12. Verfahren nach Anspruch 11, wobei die Kombination des Verfahrens der Ansprüche 1 bis 10 und des einen oder der mehreren anderen Verfahren eine lineare Funktion dieser Verfahren oder eine multiplikative Funktion dieser Verfahren ist.

13. Verfahren nach einem der vorhergehenden Ansprüche, wobei das Verfahren mit einem Verfahren zum Schätzen der Wahrnehmungsqualität eines decodierten Videosignals kombiniert wird, das aus einem codierten oder einem verschlüsselten oder einem codierten und verschlüsselten Videosignal decodiert wird.

14. Verfahren zum Überwachen der Qualität eines übertragenen Videosignals mit den folgenden Schritten:

A) Senden des Audiosignals von einem Server an den Client;
B) Client-seitiges Ausführen des Verfahrens zum Schätzen der Wahrnehmungsqualität des übertragenen Audiosignals nach einem der Ansprüche 1 bis 13;
C) Übermitteln des Ergebnisses der Schätzung des Schritts B) an den Server;
D) Server-seitiges Überwachen der Qualität des übertragenen Audiosignals.

15. Verfahren zum Überwachen der Qualität eines übertragenen Audiosignals nach Anspruch 14 mit den folgenden zusätzlichen Schritten:

F) Analysieren der überwachten Qualität des übertragenen Audiosignals, vorzugsweise in Abhängigkeit von Übertragungsparametern; und wahlweise
F) Ändern der Übertragungsparameter basierend auf der Analyse des Schritts E), um die Qualität des übertragenen Audiosignals zu erhöhen.

16. Vorrichtung zum Schätzen der Wahrnehmungsqualität eines decodierten Audiosignals, das aus einem codierten Audiosignal oder einem verschlüsselten Audiosignal oder aus einem codierten und verschlüsselten Audiosignal decodiert wird, wobei die Vorrichtung aufweist:

eine Kompressionsqualitätsschätzeinrichtung, die konfiguriert ist, um den Kompressions-Qualitätseinfluss $Icod_A$ aufgrund der Audiokompression zu schätzen;
und **dadurch gekennzeichnet, dass**:

die Kompressionsqualitätsschätzeinrichtung konfiguriert ist, um den Rahmenverlust-Qualitätseinfluss $Itra_A$ aufgrund des Audiorahmenverlusts unter Verwendung des geschätzten Kompressions-Qualitätseinflusses $Icod_A$ zu schätzen, wobei das Schätzen des Rahmenverlust-Qualitätseinflusses $Itra_A$ wenigstens eines der Folgenden verwendet: einen oder mehrere Koeffizienten, die mittlere Rahmenverlustrate Pfl, vorzugsweise in Prozent, die mittlere Anzahl von Rahmen, die hintereinander verloren werden $\mu$; und wobei das Schätzen des Rahmenverlust-Qualitätseinflusses $Itra_A$ gemäß der Gleichung

$$Itra_A = (b0 - Icod_A) \cdot \frac{Pfl}{((b1 \cdot \mu + b2) + Pfl)}$$

durchgeführt wird, wobei b0, b 1 und b2 Koeffizienten sind; und
eine Einstelleinrichtung, die konfiguriert ist, um die Wahrnehmungsqualität $Q_A$ des decodierten Audiosignals einzustellen.

17. Vorrichtung nach Anspruch 16, wobei die Kompressionsqualitätsschätzeinrichtung konfiguriert ist, um die Kompressionsqualität gemäß der Gleichung

$$Icod_A = a1 \cdot \exp(a2 \cdot Bitrate) + a3$$

zu schätzen, wobei a1, a2 und a3 Koeffizienten sind, die von wenigstens einem der Folgenden abhängen: der Art des codierten Audiosignals, der Art des komprimierten Audiosignals, der Art des verschlüsselten Audiosignals, und wobei *Bitrate* die Bitrate bezeichnet.

18. Vorrichtung nach Anspruch 16 oder 17, wobei die Einstellvorrichtung konfiguriert ist, um die Wahrnehmungsqualität $Q_A$ des decodierten Audiosignals unter Verwendung der Gleichung

$$Q_A = Qo_A - Icod_A - Itra_A$$

einzustellen, wobei $Qo_A$ eine feste Basisqualität bezeichnet und wobei vorzugsweise $Qo_A = 100$.

19. Vorrichtung zum Schätzen der Wahrnehmungsqualität eines decodierten Audiosignals, das aus einem codierten und/oder verschlüsselten Audiosignal decodiert wird, wobei die Vorrichtung einen Computer oder Mikrochip aufweist, der konfiguriert ist, um das Verfahren nach den Ansprüchen 1 bis 15 durchzuführen.

20. Set-Top Box, die mit einem Empfänger zum Empfangen eines codierten und/oder verschlüsselten Audiosignals verbindbar ist, wobei die Set-Top Box die Vorrichtung nach einem der Ansprüche 16 bis 18 aufweist.

**Revendications**

1. Procédé d'évaluation de la qualité de perception d'un signal audio décodé, décodé à partir d'un signal audio encodé ou à partir d'un signal audio encrypté ou à partir d'un signal audio encodé et encrypté, ledit procédé comprenant l'étape :

a) d'évaluation de l'impact de qualité de compression *Icod_A* dû à la compression audio ; et **caractérisé par** l' étape :

b) d'évaluation de l'impact de qualité de perte de trame $Itra_A$ dû à la perte de trame audio, en exploitant l'impact de qualité de compression $Icod_A$, l'étape d'évaluation de l'impact de qualité de perte de trame $Itra_A$ exploitant au moins soit un ou plusieurs coefficients, soit le taux moyen de perte de trame $Pfl$, préférentiellement exprimé en pourcentage, soit le nombre moyen de trames perdues dans une rangée $\mu$ ; et l'étape d'évaluation de l'impact de qualité de perte de trame $Itra_A$ étant exécutée conformément à l'équation

$$Itra_A = (b0 - Icod_A) \cdot \frac{Pfl}{((b1 \cdot \mu + b2) + Pfl)} \; ,$$

où $b0$, $b1$ et $b2$ sont des coefficients ; et

c) d'évaluation de la qualité de perception $Q_A$ du signal audio décodé en exploitant les évaluations obtenues lors des étapes précédentes.

2. Procédé selon la revendication 1, où l'étape a) d'évaluation de l'impact de qualité de compression $Icod_A$ recourt à un ou plusieurs coefficients ou au débit binaire, à un ou plusieurs coefficients et au débit binaire, le ou les coefficients dépendant du type de signal audio encodé, ou de signal audio encrypté, ou de signal audio encodé et encrypté.

3. Procédé selon la revendication 2, où l'étape a) d'évaluation de l'impact de qualité de compression $Icod_A$ est exécutée conformément à l'équation

$$Icod_A = a1 \cdot \exp(a2 \cdot bitrate) + a3 \; ,$$

où $a1$, $a2$, et $a3$ sont des coefficients dépendant d'au moins soit le type de signal audio encodé, soit le type de signal audio comprimé, soit le type de signal audio encrypté, et où $bitrate$ représente le débit binaire.

4. Procédé selon l'une des revendications 1 à 3, où l'étape b) est exécutée en appliquant l'équation

$$Q_A = Qo_A - Icod_A \; ,$$

où $Qo_A$ représente une qualité de base fixe, et où $Qo_A = 100$, préférentiellement.

5. Procédé selon l'une des revendications 1 à 4, où l'étape c) est exécutée en appliquant l'une des équations

$$Q_A = f(Qo_A, Icod_A, Itra_A)$$

avec une fonction f appropriée ; ou

$$Q_A = Qo_A - \alpha \, Icod_A - \beta \, Itra_A$$

avec $0 \leq \alpha, \beta \leq 1$; ou

$$Q_A = Qo_A - Icod_A - Itra_A,$$

où $Qo_A$ représente une qualité de base fixe, et où $Qo_A = 100$, préférentiellement.

**6.** Procédé selon l'une des revendications 1 à 5, où les coefficients sont obtenus par application d'une méthode des moindres carrés en exploitant les taux de tests de perception comme valeurs de consigne.

**7.** Procédé selon l'une des revendications précédentes, où le signal audio est encodé/décodé, ou encrypté/décrypté, ou encodé/décodé et encrypté/décrypté conformément à un des types de codec suivants : MPEG-1 couche II (mp2), MPEG-1 couche III (mp3), MPEG-2 AAC LC (aac), MPEG-4 HE-AACv2 (heaac), et AC-3 (ac3).

**8.** Procédé selon l'une des revendications précédentes, où le signal audio est au moins une partie d'un flux de données non interactif, préférentiellement d'un flux audio ou audiovisuel non interactif, ou au moins une partie d'un flux de données interactif, préférentiellement d'un flux audio ou audiovisuel interactif.

**9.** Procédé selon l'une des revendications précédentes, où au moins une partie des coefficients sont en outre dépendants du contenu du signal audio.

**10.** Procédé selon l'une des revendications précédentes, où au moins une partie des valeurs suivantes sont calculées à partir de l'information d'en-tête de paquet extraite du train de bits du signal audio et/ou dérivée de l'information supplémentaire : au moins une partie des coefficients, le débit binaire, le taux moyen de perte de trame $Pfl$, le nombre moyen de trames perdues dans une rangée $\mu$.

**11.** Procédé selon l'une des revendications précédentes, où ledit procédé est associé à un ou à plusieurs autres procédés d'évaluation de l'impact sur la qualité par d'autres dégradations que l'encodage, ou l'encryptage, ou l'encodage et l'encryptage d'un signal audio, le ou les autres procédés comprenant chacun au moins une étape d'évaluation d'une qualité de perception du signal audio décodé.

**12.** Procédé selon la revendication 11, où l'association du procédé selon les revendications 1 à 10 à un ou plusieurs autres procédés est une fonction desdits procédés ou une fonction multiplicative desdits procédés.

**13.** Procédé selon l'une des revendications précédentes, où ledit procédé est associé à un procédé d'évaluation de la qualité de perception d'un signal vidéo décodé, décodé à partir d'un signal vidéo encodé ou d'un signal vidéo encrypté ou d'un signal vidéo encodé et encrypté.

**14.** Procédé de suivi de la qualité d'un signal audio transmis, comprenant les étapes :

A) de transmission du signal audio d'un serveur au client ;
B) d'exécution côté client du procédé d'évaluation de la qualité de perception du signal audio transmis selon l'une des revendications 1 à 13 ;
C) de transfert du résultat de l'évaluation de l'étape B) au serveur ;
D) de suivi côté serveur de la qualité du signal audio transmis.

**15.** Procédé de suivi de la qualité d'un signal audio transmis selon la revendication 14, avec les étapes additionnelles :

E) d'analyse de la qualité suivie du signal audio transmis, préférentiellement en fonction de paramètres de transmission ; et facultativement
F) de modification des paramètres de transmission sur la base de l'analyse de l'étape E) afin d'améliorer la qualité du signal audio transmis.

**16.** Dispositif pour l'évaluation de la qualité de perception d'un signal audio décodé, décodé à partir d'un signal audio encodé ou d'un signal audio encrypté ou d'un signal audio encodé et encrypté, ledit procédé comprenant l'étape, ledit dispositif comprenant :

un évaluateur de qualité de compression prévu pour évaluer l'impact de qualité de compression $Icod_A$ dû à la compression audio ; et **caractérisé**
**en ce que** l'évaluateur de qualité de compression est prévu pour évaluer l'impact de qualité de perte de trame $Itra_A$ dû à la perte de trame audio, en exploitant l'impact de qualité de compression $Icod_A$, l'étape d'évaluation de l'impact de qualité de perte de trame $Itra_A$ exploitant au moins soit un ou plusieurs coefficients, soit le taux moyen de perte de trame $Pfl$, préférentiellement exprimé en pourcentage, soit le nombre moyen de trames perdues dans une rangée $\mu$ ; et l'évaluation de l'impact de qualité de perte de trame $Itra_A$ étant exécutée conformément à l'équation

$$Itra_A = (b0 - Icod_A) \cdot \frac{Pfl}{((b1 \cdot \mu + b2) + Pfl)} ,$$

où *b0, b1* et *b2* sont des coefficients ; et
un ajusteur prévu pour ajuster la qualité de perception $Q_A$ du signal audio décodé.

**17.** Dispositif selon la revendication 16, où l'évaluateur de qualité de compression est prévu pour évaluer la qualité de compression par application de l'équation

$$Icod_A = a1 \cdot \exp(a2 \cdot bitrate) + a3 ,$$

où *a1, a2,* et *a3* sont des coefficients dépendant d'au moins soit le type de signal audio encodé, soit le type de signal audio comprimé, soit le type de signal audio encrypté, et où *bitrate* représente le débit binaire.

**18.** Dispositif selon la revendication 16 ou la revendication 17, où l'ajusteur est prévu pour ajuster la qualité de perception $Q_A$ du signal audio décodé par application de l'équation

$$Q_A = Qo_A - Icod_A - Itra_A;$$

où $Qo_A$ représente une qualité de base fixe, et où $Qo_A = 100$, préférentiellement.

**19.** Dispositif pour l'évaluation de la qualité de perception d'un signal audio décodé, décodé à partir d'un signal audio encodé et/ou encrypté, ledit dispositif comprenant un ordinateur ou une microplaquette prévus pour exécuter le procédé selon les revendications 1 à 15.

**20.** Décodeur connectable à un récepteur pour la réception d'un signal audio encodé et/ou encrypté, ledit décodeur comportant un dispositif selon l'une des revendications 16 à 18.

Fig. 1

Fig. 2

Fig. 3

Fig. 4

Fig. 5

Fig. 6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2413604 A1

### Non-patent literature cited in the description

- **A.W. RIX ; J.G. BEERENDS ; D.-S-KIM.** Objective Assessment of Speech and Audio Quality - Technology and Applications. *IEEE Transactions on Audio, Speech and Language Processing,* 2006, vol. 14 (6
- The E-model, a computational model for use in transmission planning. ITU-T Recommendation G.107. 2005
- **A. CLARK.** Description of VQMON algorithm. *ITUT del. cont. COM12-D105,* 2003
- **S. BROOM.** VoIP: quality assessment: Taking account of the edge-device. *IEEE Trans. Audio Speech Language Process,* 2006, vol. 14 (6
- **A. CLARK.** Modeling the effects of burst packet loss and recency on subjective voice quality. *Internet Telephony Workshop (IPtel,* 2001
- **A. RAAKE.** Short-and long-term packet loss behaviour: Towards speech quality prediction for arbitrary loss distributions. *IEEE Trans. Audio, Speech Language Process,* 2006, vol. 14 (6
- **M. GRAUBNER ; P. MOGRE ; T. LORENZEN.** QoE Assessment for Audio Contribution over IP (ACIP. *AES 38th International Conference on Sound Quality Evaluation,* 2010
- **N. EGI ; T. HAYASHI ; A. TAKAHASHI.** Parametric Packet-Layer Model for Evaluation Audio Quality in Multimedia Streaming Services. *IEICE Transactions on Communications,* 2010, vol. E93.B, 1359-1366
- **B. FEITEN ; A. RAAKE ; M.-N. GARCIA ; U. WÜSTENHAGEN ; J. KROLL.** Subjective Quality Evaluation of Audio Streaming Applications on Absolute and Paired Rating Scales. *Pro. of 126th AES Convention,* 2009
- **M-N. GARCIA ; A. RAAKE.** Normalization Of Subjective Video Test Results Using A Reference Test And Anchor Conditions For Efficient Model Development. *Proc. of Second International Workshop on Quality of Multimedia Experience (QoMEX'10,* 2010
- *ITU-T Recommendation P.800: Methods for Subjective Determination of Transmission Quality,* 1996
- *ITU-T Recommendation P. 910: Subjective video quality assessment methods for multimedia applications,* 1999
- **A. RAAKE ; M.N. GARCIA ; S. MOELLER ; J. BERGER ; F. KLING ; P. LIST ; J. JOHANN ; C. HEIDEMANN.** T-V-MODEL: Parameter-based prediction of IPTV quality. *Proc. of ICASSP,* 2008
- **M-N. GARCIA ; A. RAAKE.** Impairment-factor based audio-visual quality model for IPTV. *Proc. of QOMEX,* 2009